(19) Europäisches Patentamt

European Patent Office

Office européen des brevets

(11) **EP 1 693 834 A1**

(12) **EUROPEAN PATENT APPLICATION**

(43) Date of publication:
**23.08.2006 Bulletin 2006/34**

(51) Int Cl.:
*G11B 5/70* *(2006.01)*    *G11B 5/127* *(2006.01)*
*G11B 5/39* *(2006.01)*

(21) Application number: **06003595.3**

(22) Date of filing: **22.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.02.2005 JP 2005044927**

(71) Applicant: **FUJI PHOTO FILM CO., LTD.**
**Minami-Ashigara-shi, Kanagawa 250-0193 (JP)**

(72) Inventors:
• **Harasawa, Takeshi**
 **Odawara-shi**
 **Kanagawa 250-0001 (JP)**

• **Abe, Naoto**
 **Odawara-shi**
 **Kanagawa 250-0001 (JP)**
• **Nagata, Takeshi**
 **Odawara-shi**
 **Kanagawa 250-0001 (JP)**

(74) Representative: **HOFFMANN EITLE**
**Patent- und Rechtsanwälte**
**Arabellastrasse 4**
**81925 München (DE)**

(54) **Magnetic recording medium**

(57)    Provided is a magnetic recording medium capable of achieving high reproduction output in a short wavelength region, The magnetic recording medium comprises a nonmagnetic layer comprising a nonmagnetic powder and a binder and a magnetic layer comprising a ferromagnetic powder and a binder in this order on a nonmagnetic support. The magnetic layer has a squareness ranging from 0.6 to 1.0 in a perpendicular direction, and the magnetic recording medium is employed for recording a magnetic signal on the medium in a longitudinal direction at a linear recording density of equal to or greater than 300Kbpi using a recording head with a gap length of equal to or less than 0.3 micrometer, and reproducing the magnetic signal using a magnetoresistive head with a shield spacing of equal to or less than 0.2 micrometer.

EP 1 693 834 A1

## Description

**FIELD OF THE INVENTION**

The present invention relates to a magnetic recording medium for high-density recording.

**BACKGROUND OF THE INVENTION**

With the growing popularity of office computers such as minicomputers, personal computers, and work stations, a great amount of research is being conducted into external recording media in the form of magnetic tapes for recording computer data (known as "backup tapes"). In the development of magnetic tapes for such applications, there is strong demand for greater recording capacity, particularly in conjunction with efforts to reduce the size and increase the data processing capability of computers to achieve both high-capacity recording and size reduction.

In recent years, reproduction heads operating on the principle of magnetoresistance have been proposed as being suited to high densification. Their use with hard disks has already begun. Magnetoresistive (MR) heads achieve several times the reproduction output of conventionally employed inductive magnetic heads without employing inductive coils. Thus, device noise such as impedance noise diminishes and magnetic recording medium noise decreases, thereby permitting a high S/N ratio and substantially improving high density recording characteristics.

For example, Japanese Unexamined Patent Publication (KOKAI) Nos. 2003-22515 and 2003-272124 disclose magnetic recording media employed for high-density recording and reproduction systems in which MR heads are employed as a reproduction head. Magnetic recording media described in the above publications exhibit various excellent characteristics in systems using MR heads.

On the other hand, there has been improvement in MR heads in recent years, and MR heads with a short shield spacing have been proposed. However, research conducted by the present inventors has revealed that the techniques described in above publications do not readily yield adequate reproduction output in a short wavelength region where magnetic signals recorded at high density are reproduced with an MR head with a short shield spacing.

SUMMARY OF THE INVENTION

It is an object of the present invention to provide a magnetic recording medium capable of achieving high reproduction output in a short wavelength region.

The present inventors conducted extensive research into achieving the above-stated object, resulting in the following discovery.

In conventional magnetically recording methods, the orientation of the magnetic layer is conducted in the same direction as the signal recording direction, In general, in the magnetic tape in which signals are recorded in a longitudinal direction, the orientation of the magnetic layer is conducted in the same direction as the recording direction, that is a longitudinal direction (longitudinal orientation and longitudinal recording). In a high wavelength region, such recording methods yield good reproduction output. However, in recent years, recording has been conducted at higher densities, as well as the shield spacing of an MR head has tended to shorten. When reproducing in such a short wavelength region, it is difficult to achieve adequate reproduction output in a system in which longitudinal orientation and longitudinal recording are conducted. By contrast, as the result of further research by the present inventors, it was found that it was possible to achieve high reproduction output in a short wavelength region by using a recording method that has not been employed thus far, that is, by recording a magnetic signal in a longitudinal direction of a magnetic layer that has been actively oriented in the perpendicular direction (perpendicular orientation, longitudinal recording). The present invention was devised on that basis.

That is, means for achieving the aforementioned object are as follows;

[1] A magnetic recording medium comprising a nonmagnetic layer comprising a nonmagnetic powder and a binder and a magnetic layer comprising a ferromagnetic powder and a binder in this order on a nonmagnetic support, wherein said magnetic layer has a squareness ranging from 0.6 to 1.0 in a perpendicular direction, and said magnetic recording medium is employed for recording a magnetic signal on the medium in a longitudinal direction at a linear recording density of equal to or greater than 300Kbpi using a recording head with a gap length of equal to or less than 0.3 micrometer, and reproducing said magnetic signal using a magnetoresistive head with a shield spacing of equal to or less than 0.2 micrometer.

[2] Use of a magnetic recording medium for recording a magnetic signal with a recording head and reproducing the magnetic signal with a magnetoresistive head, wherein said magnetic recording medium comprises a nonmagnetic layer comprising a nonmagnetic powder and a binder and a magnetic layer comprising a ferromagnetic powder and a binder in this order on a nonmagnetic support,

said magnetic layer has a squareness ranging from 0.6 to 1.0 in a perpendicular direction,

said recording head has a gap length of equal to or less than 0.3 micrometer,

said magnetoresistive head has a shield spacing of equal to or less than 0.2 micrometer,

said magnetic signal is recorded on the medium in a longitudinal direction at a linear recording density of equal to or greater than 300Kbpi.

[3] The use according to [2], wherein said recording head has a saturation magnetic flux density of equal to or greater than 1.5 T.

[4] The use according to [2] or [3], wherein said magnetic layer has a thickness ranging from 0.01 to 0.15 micrometer.

[5] The use according to any of [2] to [4], wherein said magnetic layer has a coercivity ranging from 2000 to 5000 Oe.

[6] The use according to any of [2] to [5], wherein said magnetic layer has a magnetization switching volume ranging from 1000 to 15000 nm$^3$,

[7] The use according to any of [2] to [6], wherein said magnetic recording medium is one formed by coating a coating liquid for forming a nonmagnetic layer on said nonmagnetic support and drying the coating liquid for forming a nonmagnetic layer to form a nonmagnetic layer, and then coating a coating liquid for forming a magnetic layer on said nonmagnetic layer and drying the coating liquid for formirig a magnetic layer.

[8] A method of recording a magnetic signal on a magnetic recording medium with a recording head and reproducing the magnetic signal with a magnetoresistive head, wherein

said magnetic recording medium comprises a nonmagnetic layer comprising a nonmagnetic powder and a binder and a magnetic layer comprising a ferromagnetic powder and a binder in this order on a nonmagnetic support,

said magnetic layer has a squareness ranging from 0.6 to 1.0 in a perpendicular direction,

said recording head has a gap length of equal to or less than 0.3 micrometer,

 said magnetoresistive head has a shield spacing of equal to or less than 0.2 micrometer,

said magnetic signal is recorded on the medium in a longitudinal direction at a linear recording density of equal to or greater than 300Kbpi.

[9] The method according to [8], wherein said recording head has a saturation magnetic flux density of equal to or greater than 1.5 T.

[10] The method according to [8] or [9], wherein said magnetic layer has a thickness ranging from 0.01 to 0.15 micrometer.

[11] The method according to any of [8] to [10], wherein said magnetic layer has a coercivity ranging from 2000 to 5000 Oe.

[12] The method according to any of [8] to [11], wherein said magnetic layer has a magnetization switching volume ranging from 1000 to 15000 nm$^3$.

[13] The method according to any of [8] to [12], wherein said magnetic recording medium is one formed by coating a coating liquid for forming a nonmagnetic layer on said nonmagnetic support and drying the coating liquid for forming a nonmagnetic layer to form a nonmagnetic layer, and then coating a coating liquid for forming a magnetic layer on said nonmagnetic layer and drying the coating liquid for forming a magnetic layer.

The present invention can provide a magnetic recording medium permitting high reproduction output in a short wavelength region.

DESCRIPTION OF THE EMBODIMENTS

The present invention relates to a magnetic recording medium comprising a nonmagnetic layer comprising a nonmagnetic powder and a binder and a magnetic layer comprising a ferromagnetic powder and a binder in this order on a nonmagnetic support, wherein

said magnetic layer has a squareness ranging from 0.6 to 1.0 in a perpendicular direction, and

said magnetic recording medium is employed for recording a magnetic signal on the medium in a longitudinal direction at a linear recording density of equal to or greater than 300Kbpi using a recording head with a gap length of equal to or less than 0.3 micrometer, and reproducing said magnetic signal using a magnetoresistive head (also referred to as "MR head", hereinafter) with a shield spacing of equal to or less than 0.2 micrometer.

 The present invention further relates to use of a magnetic recording medium for recording a magnetic signal with a recording head and reproducing the magnetic signal with a magnetoresistive head, wherein

said magnetic recording medium comprises a nonmagnetic layer comprising a nonmagnetic powder and a binder and a magnetic layer comprising a ferromagnetic powder and a binder in this order on a nonmagnetic support,

said magnetic layer has a squareness ranging from 0.6 to 1.0 in a perpendicular direction,

said recording head has a gap length of equal to or less than 0.3 micrometer,

said magnetoresistive head has a shield spacing of equal to or less than 0.2 micrometer,

said magnetic signal is recorded on the medium in a longitudinal direction at a linear recording density of equal to or greater than 300Kbpi.

The present invention still further relates to a method of recording a magnetic signal on a magnetic recording medium with a recording head and reproducing the magnetic signal with a magnetoresistive head, wherein

said magnetic recording medium comprises a nonmagnetic layer comprising a nonmagnetic powder and a binder and a magnetic layer comprising a ferromagnetic powder and a binder in this order on a nonmagnetic support,

said magnetic layer has a squareness ranging from 0.6 to 1.0 in a perpendicular direction,

said recording head has a gap length of equal to or less than 0.3 micrometer,

said magnetoresistive head has a shield spacing of equal to or less than 0.2 micrometer,

said magnetic signal is recorded on the medium in a longitudinal direction at a linear recording density of equal to or greater than 300Kbpi.

The present invention will be described in greater detail below.

The magnetic recording medium of the present invention is one employed for recording a magnetic signal on the medium in a longitudinal direction at a linear recording density of equal to or greater than 300Kbpi using a recording head with a gap length of equal to or less than 0.3 micrometer, and reproducing said magnetic signal using a magnetoresistive head with a shield spacing of equal to or less than 0.2 micrometer. It is difficult to achieve good reproduction output in a longitudinally oriented magnetic layer in a short wavelength region where an MR head with a short shield spacing is employed to reproduce a magnetic signal recorded at such a high linear recording density. By contrast, in the present invention, since orientation processing is conducted in a perpendicular direction of the magnetic layer and the squareness of the magnetic layer in the perpendicular direction is set to 0.6 to 1.0, it is possible to achieve high reproduction output in such a short wavelength region as stated above. In the present invention, the squareness of the magnetic layer in the perpendicular direction is referred to as the squareness after demagnetizing field correction. The upper limit of the squareness in the perpendicular direction following this correction is theoretically 1.0. In addition, when the squareness in the perpendicular direction is less than 0.6, it is difficult to ensure good reproduction output in the short wavelength region. The above squareness is preferably 0.6 to 0.9, more preferably 0.6 to 0.8.

The magnetic layer can be formed by coating a magnetic layer coating liquid on the nonmagnetic layer and immediately thereafter, passing the layers through magnets having their identical poles opposed while simultaneously drying them by blowing hot air. The strength of the magnets, amount of hot air, temperature, and coating rate can be suitably adjusted to form a magnetic layer having a squareness falling within the above-stated range in the perpendicular direction.

The magnetic head for recording a magnetic signal on the magnetic recording medium of the present invention has a gap length of equal to or less than 0.3 micrometer. When the gap length of the recording head exceeds 0.3 micrometer, the magnetic field in the perpendicular direction to which the medium is subjected following passage of the head gap is large, and erases part of the recording, precluding a good S/N ratio. The gap length is preferably 0.1 to 0.2 micrometer.

The saturation magnetic flux density (Bs) of the recording head used to record a magnetic signal on the magnetic recording medium of the present invention is preferably equal to or greater than 1.5 T, more preferably from 1.8 to 2.2 T. When the saturation magnetic flux density (Bs) of the recording head is equal to or greater than 1.5 T, good recording is possible on a magnetic layer comprising a microparticulate ferromagnetic powder having high coercivity (Hc).

[Magnetic layer]

In the present invention, examples of tha ferromagnetic powder employed in the magnetic layer are a hexagonal ferrite powder and ferromagnetic metal powder. From the perspective of facilitating perpendicular orientation, the use of hexagonal ferrite powder as the ferromagnetic powder is desirable.

Examples of hexagonal ferrite powders suitable for use in the present invention are barium ferrite, strontium ferrite, lead ferrite, calcium ferrite, and various substitution products thereof, and Co substitution products. Specific examples are magnetoplumbite-type barium ferrite and strontium ferrite; magnetoplumbite-type ferrite in which the particle surfaces are covered with spinels; and magnetoplumbite-type barium ferrite, strontium ferrite, and the like partly comprising a spinel phase. The following may be incorporated into the hexagonal ferrite powder in addition to the prescribed atoms: Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, Ge, Nb and the like. Compounds to which elements such as Co-Zn, Co-Ti, Co-Ti-Zr, Co-Ti-Zn, Ni-Ti-Zn, Nb-Zn-Co, Sb-Zn-Co and Nb-Zn have been added may generally also be employed. They may comprise specific impurities depending on the starting materials and manufacturing methods employed.

With respect to the particle size of the hexagonal ferrite powder, the hexagonal plate diameter preferably ranges from 10 to 100 nm, more preferably 10 to 60 nm, and further preferably 10 to 50 nm. Particularly when employing an MR head in reproduction to increase a track density, a plate diameter equal to or less than 40 nm is desirable to reduce noise. A mean plate diameter equal to or higher than 10 nm yields stable magnetization without the effects of thermal fluctuation. A mean plate diameter equal to or less than 100 nm permits low noise and is suited to the high-density magnetic recording. The plate ratio (plate diameter/plate thickness) of the hexagonal ferrite powder preferably ranges from 1 to 15, more preferably from 1 to 7, Low plate ratio is preferable to achieve high filling property of the magnetic layer, but some times adequate orientation is not achieved. When the plate ratio is higher than 15, noise may be increased due to stacking between particles. The specific surface area by BET method of the hexagonal ferrite powders having such particle sizes ranges from 10 to 100 m$^2$/g, almost corresponding to an arithmetic value from the particle plate diameter and the plate thickness. Narrow distributions of particle plate diameter and thickness are normally good. Although difficult to render in number form, about 500 particles can be randomly measured in a TEM photograph of particles to make a comparison. This distribution is often not a normal distribution. However, when expressed as the standard deviation to the average particle size, *sigma*/average particle size = 0.1 to 2.0. The particle producing reaction system is rendered as uniform as possible and the particles produced are subjected to a distribution-enhancing treatment to achieve a narrow particle size distribution. For example, methods such as selectively dissolving ultrafine particles in an acid solution by dissolution are known.

A coercivity (Hc) of the hexagonal ferrite powder of about 500 to 5,000 Oe, approximately 40 to 398 kA/m, can normally be achieved. A high coercivity (Hc) is advantageous for high-density recording, but this is limited by the capacity of the recording head. The coercivity (Hc) of the hexagonal ferrite powder suitable for use in the present invention preferably ranges from about 2,000 to 4,000 Oe, approximately 160 to 320 kA/m, more preferably from 2,200 to 3,500 Oe, approximately 176 to 280 kA/m. When the saturation magnetization of the head employed exceeds 1.4 tesla, the coercivity (Hc) is preferably equal to or higher than 2,200 Oe, approximately 176 kA/m. Coercivity (Hc) can be controlled by particle size (plate diameter and plate thickness), the types and quantities of elements contained, substitution sites of the element, the particle producing reaction conditions, and the like. The saturation magnetization (*sigma*$_s$) can be 40 to 80 A·m$^2$/kg. The higher saturation magnetization (*sigma*$_s$) is preferred, however, it tends to decrease with decreasing particle size. Known methods of improving saturation magnetization (*sigma*$_s$) are combining spinel ferrite with magnetoplumbite ferrite, selection of the type and quantity of elements incorporated, and the like. It is also possible to employ W-type hexagonal ferrite. When dispersing the hexagonal ferrite, the surface of the hexagonal ferrite powder can be processed with a substance suited to a dispersion medium and a polymer. Both organic and inorganic compounds can be employed as surface treatment agents. Examples of the principal compounds are oxides and hydroxides of Si, Al, P, and the like; various silane coupling agents; and various titanium coupling agents. The quantity of surface treatment agent added can range from 0.1 to 10 weight percent relative to the weight of the hexagonal ferrite powder. The pH of the hexagonal ferrite powder is also important to dispersion. A pH of about 4 to 12 is usually optimum for the dispersion medium and polymer. From the perspective of the chemical stability and storage properties of the medium, a pH of about 6 to 11 can be selected. Moisture contained in the hexagonal ferrite powder also affects dispersion. There is an optimum level for the dispersion medium and polymer, usually selected from the range of 0.01 to 2.0 weight percent. Methods of manufacturing the hexagonal ferrite include: (1) a vitrified crystallization method consisting of mixing into a desired ferrite composition barium oxide, iron oxide, and a metal oxide substituting for iron with a glass forming substance such as boron oxide; melting the mixture; rapidly cooling the mixture to obtain an amorphous material; reheating the amorphous material; and refining and comminuting the product to obtain a barium ferrite crystal powder; (2) a hydrothermal reaction method consisting of neutralizing a barium ferrite composition metal salt solution with an alkali; removing the by-product; heating the liquid phase to 100°C or greater; and washing, drying, and comminuting the product to obtain barium ferrite crystal powder; and (3) a coprecipitation method consisting of neutralizing a barium ferrite composition metal salt solution with an alkali; removing the by-product; drying the product and processing it at equal to or less than 1,100°C; and comminuting the product to obtain barium ferrite crystal powder. However, any manufacturing method can be selected in the present invention.

In the present invention, the ferromagnetic metal powder employed in the magnetic layer is not specifically limited, but preferably a ferromagnetic metal power comprised primarily of *alpha* -Fe. In addition to prescribed atoms, the following atoms can be contained in the ferromagnetic metal powder: Al, Si, S, Sc, Ca, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B and the like. Particularly, the incorporation of at least one of the following in addition to *alpha* -Fe is desirable: Al, Si, Ca, Y, Ba, La, Nd, Co, Ni and B, further desirably Co, Y, and Al. The Co content preferably ranges from 0 to 40 atom percent, more preferably from 15 to 35 atom percent, further preferably from 20 to 35 atom percent with respect to Fe. The Y content preferably ranges from 1.5 to 12 atom percent, more preferably from 3 to 10 atom percent, further preferably from 4 to 9 atom percent. The Al content preferably ranges from 1.5 to 12 atom percent, more preferably from 3 to 10 atom percent, further preferably from 4 to 9 atom percent.

These ferromagnetic metal powders may be pretreated prior to dispersion with dispersing agents, lubricants, surfactants, antistatic agents, and the like, described further below. Specific examples are described in Japanese Examined Patent Publication (KOKOKU) Showa Nos. 44-14090, 45-18372, 4?-22062, 47-22513, 46-28466, 46-38755, 47-4286, 47-12422, 47-17284, 47-18509, 47-18573, 39-10307, and 46-39639; and U.S. Patent Nos. 3,026,215, 3,031,341, 3,100,194, 3,242,005, and 3,389,014.

The ferromagnetic metal powder may contain a small quantity of hydroxide or oxide. Ferromagnetic metal powders obtained by known manufacturing methods may be employed. The following are examples of methods of manufacturing ferromagnetic metal powders: methods of reduction with compound organic acid salts (chiefly oxalates) and reducing gases such as hydrogen; methods of reducing iron oxide with a reducing gas such as hydrogen to obtain Fe or Fe-Co particles or the like; methods of thermal decomposition of metal carbonyl compounds; methods of reduction by addition of a reducing agent such as sodium boron hydride, hypophosphite, or hydrazine to an aqueous solution of ferromagnetic metal; and methods of obtaining micropowder by vaporizing a metal in a low-pressure inert gas. The ferromagnetic metal powders obtained in this manner may be subjected to any of the known slow oxidation treatments, such as immersion in an organic solvent followed by drying; the method of immersion in an organic solvent followed by formation of an oxide film on the surface by feeding in an oxygen-containing gas, then drying; and the method of forming an oxide film on the surface by adjusting the partial pressure of oxygen gas and a inert gas without using an organic solvent.

The ferromagnetic metal powder employed in the magnetic layer preferably has a specific surface area by BET method of 45 to 80 $m^2/g$, more preferably 50 to 70 $m^2/g$. When the specific surface area by BET method is 45 $m^2/g$ or more, noise drops, and at 80 $m^2/g$ or less, surface properties are good. The crystallite size of the ferromagnetic metal powder is preferably 80 to 180 angstroms, more preferably 100 to 180 angstroms, and further preferably, 110 to 175 angstroms. The major axis length of the ferromagnetic metal powder preferably ranges from 0.01 to 0.15 micrometer, more preferably 0.03 to 0.15 micrometer, and further preferably 0.03 to 0.12 micrometer. The acicular ratio of the ferromagnetic metal powder preferably ranges from 3 to 15, more preferably from 5 to 12. The saturation magnetization (*sigma*$_s$) of the ferromagnetic metal powder preferably ranges from 100 to 180 A·$m^2/kg$, more preferably from 110 to 170 A·$m^2/kg$, and further preferably from 125 to 160 A·$m^2/kg$. The coercivity of the ferromagnetic metal powder preferably ranges from 2,000 to 3,500 Oe, approximately 160 to 280 kA/m, more preferably from 2,200 to 3,000 Oe, approximately 176 to 240 kA/m.

The moisture content of the ferromagnetic metal powder preferably ranges from 0.01 to 2 percent; the moisture content of the ferromagnetic metal powder is desirably optimized by means of the type of binder. The pH of the ferromagnetic metal powder is desirably optimized in combination with the binder employed; the range is normally pH 4 to 12, preferably pH 6 to 10. The ferromagnetic metal powder may be surface treated as necessary with Al, Si, P, an oxide thereof, and the like. The quantity employed desirably ranges from 0.1 to 10 percent of the ferromagnetic metal powder, and when the surface treatment is conducted, a lubricant such as a fatty acid is desirably adsorbed in a quantity of equal to or less than 100 $mg/m^2$. An inorganic ion in the form of soluble Na, Ca, Fe, Ni, Sr, or the like may be contained in the ferromagnetic metal powder. These are preferably substantially not contained, but at levels of equal to or less than 200 ppm, characteristics are seldom affected. Further, the ferromagnetic metal powder employed in the present invention desirably has few pores. The content of pores is preferably equal to or less than 20 volume percent, more preferably equal to or less than 5 volume percent. So long as the above-stated characteristics regarding particle size are satisfied, the particles may be acicular, rice-particle shaped, or spindle-shaped. The switching field distribution (SFD) of the ferromagnetic metal powder itself is desirably low. It is preferably equal to or less than 0.8. It is preferable to narrow the He distribution of the ferromagnetic metal powder. When the SFD is equal to or less than 0.8, good electromagnetic characteristics are achieved, magnetization switching is sharp and peak shifts are small, which are suited to high density digital magnetic recording. A low Hc distribution can be achieved, for example, by improving the goethite particle size distribution, by preventing sintering between particles and the like in the ferromagnetic metal powder.

[Nonmagnetic layer]

The magnetic recording medium of the present invention comprises a nonmagnetic layer comprising a nonmagnetic powder and a binder between a nonmagnetic support and a magnetic layer. Details with respect to the nonmagnetic layer will be described below.

The nonmagnetic layer is not specifically limited so long as it is substantially nonmagnetic. It can comprise a magnetic powder so long as it is substantially nonmagnetic. The term, "substantially nonmagnetic" means the nonmagnetic layer is permitted to have magnetism to the extent that electromagnetic characteristics of the magnetic layer are not substantially decreased. For example, the term "substantially nonmagnetic" is used to mean having a residual magnetic flux density in the nonmagnetic layer of equal to or less than 0.01 T or a coercivity (Hc) of equal to or less than 7.96 kA/m, approximately 100 Oe, it being preferable not to have a residual magnetic flux density or coercivity at all.

The nonmagnetic powder comprised in the nonmagnetic layer can be selected from inorganic compounds such as metal oxides, metal carbonates, metal sulfates, metal nitrides, metal carbides, metal sulfides and the like. Examples of inorganic compounds are *alpha*-alumina having an *alpha*-conversion rate equal to or higher than 90 percent, *beta*-alumina, *gamma*-alumina, *theta*-alumina, silicon carbide, chromium oxide, cerium oxide, *alpha-iron* oxide, hematite, goethite, corundum, silicon nitride, titanium carbide, titanium dioxide, silicon dioxide, tin oxide, magnesium oxide, tungsten oxide, zirconium oxide, boron nitride, zinc oxide, calcium carbonate, calcium sulfate, barium sulfate and molybdenum disulfide; these may be employed singly or in combination. Particularly desirable due to their narrow particle distribution and numerous means of imparting functions are titanium dioxide, zinc oxide, iron oxide and barium sulfate. Even more preferred are titanium dioxide and *alpha*-iron oxide. The mean particle diameter of these nonmagnetic powders preferably ranges from 0.005 to 2 micrometers, but nonmagnetic powders of differing particle size may be combined as needed, or the particle diameter distribution of a single nonmagnetic powder may be broadened to achieve the same effect. What is preferred most is a mean particle diameter in the nonmagnetic powder ranging from 0.01 to 0.2 micrometer. Particularly when the nonmagnetic powder is a granular metal oxide, a mean particle diameter equal to or less than 0.08 micrometer is preferred, and when an acicular metal oxide, the mean major axis length is preferably equal to or less than 0.3 micrometer, more preferably equal to or less than 0.2 micrometer. The tap density preferably ranges from 0.05 to 2 g/ml, more preferably from 0.2 to 1.5 g/ml. The moisture content of the nonmagnetic powder preferably ranges from 0.1 to 5 weight percent, more preferably from 0.2 to 3 weight percent, further preferably from 0.3 to 1.5 weight percent. The pH of the nonmagnetic powder preferably ranges from 2 to 11, and the pH between 5.5 to 10 is particular preferred.

The specific surface area of the nonmagnetic powder preferably ranges from 1 to 100 $m^2$/g, more preferably from 5 to 80 $m^2$/g, further preferably from 10 to 70 $m^2$/g. The crystallite size of the nonmagnetic powder preferably ranges from 0.004 micrometer to 1 micrometer, further preferably from 0.04 micrometer to 0.1 micrometer. The oil absorption capacity using dibutyl phthalate (DBP) preferably ranges from 5 to 100 ml/100g, more preferably from 10 to 80 ml/100g, further preferably from 20 to 60 ml/100g. The specific gravity preferably ranges from 1 to 12, more preferably from 3 to 6. The shape of the nonmagnetic powder may be any of acicular, spherical, polyhedral, or plate-shaped. The nonmagnetic powder having a Mohs' hardness ranging from 4 to 10 is preferred. The stearic acid (SA) adsorption capacity of the nonmagnetic powder preferably ranges from 1 to 20 micromol/$m^2$, more preferably from 2 to 15 micromol/$m^2$, further preferably from 3 to 8 micromol/$m^2$. The pH of the nonmagnetic powder preferably ranges from 3 to 6. The surface of these nonmagnetic powders is preferably treated with $Al_2O_3$, $SiO_2$, $TiO_2$, $ZrO_2$, $SnO_2$, $Sb_2O_3$, $ZnO$ and $Y_2O_3$. The surface-treating agents of preference with regard to dispersibility are $Al_2O_3$, $SiO_2$, $TiO_2$ and $ZrO_2$, and $Al_2O_3$, $SiO_2$ and $ZrO_2$ are further preferable. These may be used singly or in combination. Depending on the objective, a surface-treatment coating layer with a coprecipitated material may also be employed, the coating structure which comprises a first alumina coating and a second silica coating thereover or the reverse structure thereof may also be adopted. Depending on the objective, the surface-treatment coating layer may be a porous layer, with homogeneity and density being generally desirable.

Specific examples of nonmagnetic powders are: Nanotite from Showa Denko K. K.; HIT-100 and ZA-G1 from Sumitomo Chemical Co., Ltd.; *alpha*-hematite DPN-250, DPN-250BX DFN-245, DPN-270BX, DPN-500BX, DBN-SA1 and DBN-SA3 from Toda Kogyo Corp.; titanium oxide TTO-51B, TTO-55A, TTO-55B, TTO-55C, TTO-55S, TTO-55D, SN-100, *alpha*-hematite E270, E271, E300 and E303 from Ishihara Sangyo Co., Ltd.; titanium oxide STT-4D, STT-30D, STT-30, STT-65C, and *alpha*-hematite *alpha*-40 from Titan Kogyo K. K.; MT-100S, MT-100T, MT-150W, MT-500B, MT-600B, MT-100F, and MT-500HD from Tayca Corporation; FINEX-25, BF-1, BF-10, BF-20, and ST-M from Sakai Chemical Industry Co., Ltd.; DEFIC-Y and DEFIC-R from Dowa Mining Co., Ltd.; AS2BM and $TiO_2$P25 from Nippon Aerogil; 100A and 500A from Ube Industries, Ltd.; and sintered products of the same. Particular preferable nonmagnetic powders are titanium dioxide and *alpha*-iron oxide.

Carbon black can be added to the nonmagnetic layer. Mixing carbon black achieves the known effects of lowering surface electrical resistivity Rs and reducing light transmittance, as well as yielding the desired micro Vickers hardness. Further, the incorporation of carbon black into the nonmagnetic layer can also serve to store lubricants. Examples of types of carbon black that are suitable for use are furnace black for rubber, thermal for rubber, black for coloring and acetylene black. Based on the effect desired, the following characteristics should be optimized in the carbon black employed in the nonmagnetic layer, and effects may be achieved by using different carbon blacks in combination.

The specific surface area of carbon black employed in the nonmagnetic layer preferably ranges from 100 to 500 $m^2$/g, more preferably from 150 to 400 $m^2$/g, and the DBP oil absorption capacity preferably ranges from 20 to 400 ml/100g, more preferably from 30 to 400 ml/100g. The mean particle diameter of carbon black preferably ranges from 5 to 80 nm, more preferably from 10 to 50 nm, further preferably from 10 to 40 nm. It is preferable for carbon black that the pH ranges from 2 to 10, the moisture content ranges from 0.1 to 10 percent and the tap density ranges from 0.1 to 1 g/ml. Specific examples of types of carbon black suitable for use in the nonmagnetic layer are: BLACK PEARLS 2000, 1300, 1000, 900, 800, 880, 700 and VULCAN XC-72 from Cabot Corporation; #3050B, #3150B, #3250B, #3750B, #3950B, #950, #650B, #970B, #850B, MA-600, MA-230, #4000 and #4010 from Mitsubishi Chemical Corporation; CONDUCTEX SC, RAVEN 8800, 8000, 7000, 5750, 5250, 3500, 2100, 2000, 1800, 1500, 1255 and 1250 from Columbia Carbon Co., Ltd.; and Ketjen Black EC from Lion Akzo Co., Ltd. The carbon black employed can be surface treated with a dispersing agent or the like, grafted with a resin, or a portion of the surface may be graphite-treated. Further, the carbon black may be dispersed with a binder prior to being added to the coating liquid. These carbon blacks can be employed in a quantity of less than 50 weight percent relative to the aforementioned inorganic powder, and less than 40 weight percent relative to the total weight of the nonmagnetic layer. These types of carbon black may be employed singly or in combination. *Carbon Black Handbook* compiled by the Carbon Black Association may be consulted for types of carbon black suitable for use in the present invention.

Based on the objective, an organic powder may be added to the nonmagnetic layer. Examples are acrylic styrene resin powders, benzoguanamine resin powders, melamine resin powders, and phthalocyanine pigments. Polyolefin resin powders, polyester resin powders, polyamide resin powders, polyimide resin powders, and polyfluoroethylene resins may also be employed. The manufacturing methods described in Japanese Unexamined Patent Publication (KOKAI) Showa Nos. 62-18564 and 60-255827 may be employed.

As regards types and amounts of binder resins, lubricants, dispersants and additives; solvents; dispersion methods and the like of the nonmagnetic layer, known techniques regarding magnetic layers can be applied. In particular, known techniques for magnetic layers regarding types and amounts of binder resins, additives and dispersants can be applied to the nonmagnetic layer.

[Binder]

Conventionally known thermoplastic resins, thermosetting resins, reactive resins and mixtures thereof may be employed as binders used in the magnetic layer and nonmagnetic layer. The thermoplastic resins suitable for use have a glass transition temperature of -100 to 150°C, a number average molecular weight of 1,000 to 200,000, preferably from 10,000 to 100,000, and have a degree of polymerization of about 50 to 1,000.

Examples thereof are polymers and copolymers comprising structural units in the form of vinyl chloride, vinyl acetate, vinyl alcohol, maleic acid, acrylic acid, acrylic acid esters, vinylidene chloride, acrylonitrile, methacrylic acid, methacrylic acid esters, styrene, butadiene, ethylene, vinyl butyral, vinyl acetal, and vinyl ether; polyurethane resins; and various rubber resins. Further, examples of thermosetting resins and reactive resins are phenol resins, epoxy resins, polyurethane cured resins, urea resins, melamine resins, alkyd resins, acrylic reactive resins, formaldehyde resins, silicone resins, epoxy polyamide resins, mixtures of polyester resins and isocyanate prepolymers, mixtures of polyester polyols and polyisocyanates, and mixtures of polyurethane and polyisocyanates. These resins are described in detail in *Handbook of Plastics* published by Asakura Shoten. It is also possible to employ known electron beam-cured resins in individual layers. Examples and details of such resins are described in Japanese Unexamined Patent Publication (KOKAI) Showa No. 62-256219. The above-listed resins may be used singly or in combination. Preferred resins are combinations of polyurethane resin and at least one member selected from the group consisting of vinyl chloride resin, vinyl chloride - vinyl acetate copolymers, vinyl chloride - vinyl acetate - vinyl alcohol copolymers, and vinyl chloride - vinyl acetate - maleic anhydride copolymers, as well as combinations of the same with polyisocyanate.

Known structures of polyurethane resin can be employed, such as polyester polyurethane, polyether polyurethane, polyether polyester polyurethane, polycarbonate polyurethane, polyester polycarbonate polyurethane, and polycaprolactone polyurethane. To obtain better dispersibility and durability in all of the binders set forth above, it is desirable to introduce by copolymerization or addition reaction one or more polar groups selected from among -COOM, $-SO_3M$, $-OSO_3M$, $-P=O(OM)_2$, $-O-P=O(OM)_2$ (where M denotes a hydrogen atom or an alkali metal base), -OH, $-NR_2$, $-N^+R_3$ (where R denotes a hydrocarbon group), epoxy groups, -SH, and -CN. The quantity of the polar group is preferably from $10^{-1}$ to $10^{-8}$ mol/g, more preferably from $10^{-2}$ to $10^{-6}$ mol/g.

Specific examples of the binders employed in the present invention are VAGH, VYHH, VMCH, VAGF, VAGD, VROH, VYES, VYNC, VMCC, XYHL, XYSG, PKHH, PKHJ, PKHC, and PKFE from Union Carbide Corporation; MPR-TA, MPR-TA5, MPR-TAL, MPR-TSN, MPR-TMF, MPR-TS, NPR-TM, and MPR-TAO from Nisshin Kagaku Kogyo K. K.; 1000W, DX80, DX81, DX82, DX83, and 100FD from Denki Kagaku Kogyo K. K.; MR-104. MR-105, MR110, MR100, MR555, and 400X-110A from Nippon Zeon Co., Ltd.; Nippollan N2301, N2302, and N2304 from Nippon Polyurethane Co., Ltd.; Pandex T-5105, T-R3080, T-5201, Burnock D-400, D-210-80, Crisvon 6109, and 7209 from Dainippon Ink and Chemicals Incorporated.; Vylon UR8200, UR8300; UR-8700, RV530, and RV280 from Toyobo Co., Ltd.; Daipheramine 4020, 5020, 5100, 5300, 9020, 9022, and 7020 from Dainichiseika Color & Chemicals Mfg. Co., Ltd.; MX5004 from Mitsubishi Chemical Corporation; Sanprene SP-150 from Sanyo Chemical Industries, Ltd.; and Saran F310 and F210 from Asahi Chemical Industry Co., Ltd.

The binder employed in the nonmagnetic layer and magnetic layer in the present invention is suitably employed in a range of 5 to 50 weight percent, preferably from 10 to 30 weight percent with respect to the nonmagnetic powder or the magnetic powder. Vinyl chloride resin, polyurethane resin, and polyisocyanate are preferably combined within the ranges of: 5 to 30 weight percent for vinyl chloride resin, when employed; 2 to 20 weight percent for polyurethane resin, when employed; and 2 to 20 weight percent for polyisocyanate. However, when a small amount of dechlorination causes head corrosion, it is also possible to employ polyurethane alone, or employ polyurethane and isocyanate alone. In the present invention, when polyurethane is employed, a glass transition temperature of -50 to 150°C, preferably 0 to 100°C, and further preferably 30 to 90°C, an elongation at break of 100 to 2,000 percent, a stress at break of 0.05 to 10 kg/mm$^2$, approximately 0.49 to 98 MPa, and a yield point of 0.05 to 10 kg/mm$^2$, approximately 0.49 to 98 MPa, are desirable.

The magnetic recording medium according to the present invention may comprise at least two layers. Accordingly, the quantity of binder; the quantity of vinyl chloride resin, polyurethane resin, polyisocyanate, or some other resin in the binder; the molecular weight of each of the resins forming the magnetic layer; the quantity of polar groups; or the above-described physical characteristics or the like of the resins can naturally be different in each layer as required.

These should be optimized in each layer. Known techniques for a multilayered magnetic layer may be applied. For example, when the quantity of binder is different in each layer, increasing the quantity of binder in the magnetic layer effectively decreases scratching on the surface of the magnetic layer. To achieve good head touch, the quantity of binder in the nonmagnetic layer can be increased to impart flexibility.

Examples of polyisocyanates suitable for use in the present invention are tolylene diisocyanate, 4,4'-diphenylmethane diisocyanate, hexamethylene diisocyanate, xylylene diisocyanate, napthylene-1,5-diisocyanate, o-toluidine diisocyanate, isophorone diisocyanate, triphenylmethane triisocyanate, and other isocyanates; products of these isocyanates and polyalcohols; polyisocyanates produced by condensation of isocyanates; and the like. These isocyanates are commercially available under the following trade names, for example: Coronate L, Coronate HL, Coronate 2030, Coronate 2031, Millionate MR and Millionate MTL manufactured by Nippon Polyurethane Industry Co. Ltd.; Takenate D-102, Takenate D-110N, Takenate D-200 and Takenate D-202 manufactured by Takeda Chemical Industries Co., Ltd.; and Desmodule L, Desmodule IL, Desmodule N and Desmodule HL manufactured by Sumitomo Bayer Co., Ltd. They can be used singly or in combinations of two or more in all layers by exploiting differences in curing reactivity.

[Carbon black]

Examples of types of carbon black that are suitable for use in the magnetic layer are: furnace black for rubber, thermal for rubber, black for coloring and acetylene black. A specific surface area of 5 to 500 $m^2$/g, a DBP oil absorption capacity of 10 to 400 ml/100 g, and an average particle size of 5 to 300 nm, preferably 10 to 250 nm, more preferably 20 to 200 nm are respectively desirable. A pH of 2 to 10, a moisture content of 0.1 to 10 percent, and a tap density of 0.1 to 1 g/cc are respectively desirable. Specific examples of types of carbon black employed in the magnetic layer are: BLACK PEARLS 2000, 1300, 1000, 900, 905, 800, 700 and VULCAN XC-72 from Cabot Corporation; #80, #60, #55, #50 and #35 manufactured by Asahi Carbon Co., Ltd.; #2400B, #2300, #900, #1000, #30, #40 and #10B from Mitsubishi Chemical Corporation; CONDUCTEX SC, RAVEN 150, 50, 40, 15 and RAVEN MT-P from Columbia Carbon Co., Ltd.; and Ketjen Black EC from Lion Akzo Co., Ltd. The carbon black employed may be surface-treated with a dispersant or grafted with resin, or have a partially graphite-treated surface. The carbon black may be dispersed in advance into the binder prior to addition to the magnetic layer coating liquid. These carbon blacks may be used singly or in combination. The quantity of carbon black comprised in the magnetic layer preferably ranges from 0.1 to 30 percent relative to the ferromagnetic powder. In the magnetic layer, carbon black works to prevent static, reduce the coefficient of friction, impart light-blocking properties, enhance film strength, and the like; the properties vary with the type of carbon black employed. Accordingly, the type, quantity, and combination of carbon blacks employed in the present invention may be determined separately for the magnetic layer and the nonmagnetic layer based on the objective and the various characteristics stated above, such as particle size, oil absorption capacity, electrical conductivity, and pH, be optimized for each layer. For example, *Carbon Black Handbook* compiled by the Carbon Black Association may be consulted for types of carbon black suitable for use in the magnetic layer.

[Abrasives]

Known materials chiefly having a Mohs' hardness of 6 or greater may be employed either singly or in combination as abrasives in the present invention. These include: *alpha*-alumina with an *alpha*-conversion rate of equal to or greater than 90 percent, *beta*-alumina, silicon carbide, chromium oxide, cerium oxide, *alpha*-iron oxide, corundum, synthetic diamond, silicon nitride, silicon carbide, titanium carbide, titanium oxide, silicon dioxide, and boron nitride. Complexes of these abrasives (obtained by surface treating one abrasive with another) may also be employed. There are cases in which compounds or elements other than the primary compound are contained in these abrasives; the effect does not change so long as the content of the primary compound is equal to or greater than 90 percent. The particle size of the abrasive is preferably 0.01 to 2 micrometers, more preferably 0.05 to 1.0 micrometer, and further preferably, 0.05 to 0.5 micrometer. To enhance electromagnetic characteristics, a narrow particle size distribution is desirable. Abrasives of differing particle size may be incorporated as needed to improve durability; the same effect can be achieved with a single abrasive as with a wide particle size distribution. It is preferable that the tap density is 0.3 to 2 g/cc, the moisture content is 0.1 to 5 percent, the pH is 2 to 11, and the specific surface area is 1 to 30 $m^2$/g. The shape of the abrasive employed in the present invention may be acicular, spherical, cubic, or the like. However, a shape comprising an angular portion is desirable due to high abrasiveness. Specific examples are AKP-12, AKP-15, AKP-20, AKP-30, AKP-50, HIT-20, HIT-30, FUT-55, HIT-60, HIT-70, HIT-80, and HIT-100 made by Sumitomo Chemical Co.,Ltd.; ERC-DBM, HF-DBM, and HPS-DBM made by Reynolds Corp.; WA10000 made by Fujimi Abrasive Corp.; UB20 made by Uemura Kogyo Corp.; G-5, Chromex U2, and Chromex U1 made by Nippon Chemical Industrial Co., Ltd.; TF100 and TF140 made by Toda Kogyo Corp.; Beta Random Ultrafine made by Ibiden Co., Ltd.; and B-3 made by Showa Kogyo Co., Ltd. These abrasives may be added as needed to the nonmagnetic layer. Addition of abrasives to the nonmagnetic layer can be done to control surface shape, control how the abrasive protrudes, and the like. The particle size and quantity of the abrasives added to the magnetic layer and nonmagnetic layer should be set to optimal values.

[Additives]

Substances having lubricating effects, antistatic effects, dispersive effects, plasticizing effects, or the like may be employed as additives in the magnetic layer and nonmagnetic layer. Examples of additives are: molybdenum disulfide; tungsten disulfide; graphite; boron nitride; graphite fluoride; silicone oils; silicones having a polar group; fatty acid-modified silicones; fluorine-containing silicones; fluorine-containing alcohols; fluorine-containing esters; polyolefins; polyglycols; alkylphosphoric esters and their alkali metal salts; alkylsulfuric esters and their alkali metal salts; polyphenyl ethers; phenylphosphonic acid; *alpha*-naphthylphosphoric acid; phenylphosphoric acid; diphenylphosphoric acid; p-ethylbenzenephosphonic acid; phenylphosphinic acid; aminoquinones; various silane coupling agents and titanium coupling agents; fluorine-containing alkylsulfiuic acid esters and their alkali metal salts; monobasic fatty acids (which may contain an unsaturated bond or be branched) having 10 to 24 carbon atoms and metal salts (such as Li, Na, K, and Cu) thereof; monohydric, dihydric, trihydric, tetrahydric, pentahydric or hexahydric alcohols with 12 to 22 carbon atoms (which may contain an unsaturated bond or be branched); alkoxy alcohols with 12 to 22 carbon atoms; monofatty esters, difatty esters, or trifatty esters comprising a monobasic fatty acid having 10 to 24 carbon atoms (which may contain an unsaturated bond or be branched) and any one from among a monohydric, dihydric, trihydric, tetrahydric, pentahydric or hexahydric alcohol having 2 to 12 carbon atoms (which may contain an unsaturated bond or be branched); fatty acid esters of monoalkyl ethers of alkylene oxide polymers; fatty acid amides with 8 to 22 carbon atoms; and aliphatic amines with 8 to 22 carbon atoms.

Specific examples of the additives in the form of fatty acids are: capric acid, caprylic acid, lauric acid, myristic acid, palmitic acid, stearic acid, behenic acid, oleic acid, elaidic acid, linolic acid, linolenic acid, and isostearic acid. Examples of esters are butyl stearate, octyl stearate, amyl stearate, isooctyl stearate, butyl myristate, octyl myristate, butoxyethyl stearate, butoxydiethyl stearate, 2-ethylhexyl stearate, 2-octyldodecyl palmitate, 2-hexyldodecyl palmitate, isohexadecyl stearate, oleyl oleate, dodecyl stearate, tridecyl stearate, oleyl erucate, neopentylglycol didecanoate, and ethylene glycol dioleyl. Examples of alcohols are oleyl alcohol, stearyl alcohol, and lauryl alcohol. It is also possible to employ nonionic surfactants such as alkylene oxide-based surfactants, glycerin-based surfactants, glycidol-based surfactants and alkylphenolethylene oxide adducts; cationic surfactants such as cyclic amines, ester amides, quaternary ammonium salts, hydantoin derivatives, heterocycles, phosphoniums, and sulfoniums; anionic surfactants comprising acid groups, such as carboxylic acid, sulfonic acid, phosphoric acid, sulfuric ester groups, and phosphoric ester groups; and ampholytic surfactants such as amino acids, amino sulfonic acids, sulfuric or phosphoric esters of amino alcohols, and alkyl betaines. Details of these surfactants are described in *A Guide to Surfactants* (published by Sangyo Tosho K.K.). These lubricants, antistatic agents and the like need not be 100 percent pure and may contain impurities, such as isomers, unreacted material, by-products, decomposition products, and oxides in addition to the main components. These impurities are preferably comprised equal to or less than 30 weight percent, and more preferably equal to or less than 10 weight percent.

The lubricants and surfactants suitable for use in the present invention each have different physical effects. The type, quantity, and combination ratio of lubricants producing synergistic effects should be optimally set for a given objective. It is conceivable to control bleeding onto the surface through the use of fatty acids having different melting points in the nonmagnetic layer and the magnetic layer; to control bleeding onto the surface through the use of esters having different boiling points, melting points, and polarity; to improve the stability of coatings by adjusting the quantity of surfactant; and to increase the lubricating effect by increasing the amount of lubricant in the intermediate layer. The present invention is not limited to these examples. Generally, a total quantity of lubricant ranging from 0.1 to 50 weight percent, preferably from 2 to 25 weight percent with respect to the ferromagnetic powder in the magnetic layer or the nonmagnetic powder in the nonmagnetic layer is preferred.

All or some of the additives used in the present invention may be added at any stage in the process of manufacturing the magnetic and nonmagnetic coating liquids. For example, they may be mixed with the ferromagnetic powder before a kneading step; added during a step of kneading the ferromagnetic powder, the binder, and the solvent; added during a dispersing step; added after dispersing; or added immediately before coating. Part or all of the additives may be applied by simultaneous or sequential coating after the magnetic layer has been applied to achieve a specific purpose. Depending on the objective, the lubricant may be coated on the surface of the magnetic layer after calendering or making slits. Known organic solvents may be employed in the present invention. For example, the solvents described in Japanese Unexamined Patent Publication (KOKAI) Showa No. 6-68453 may be employed.

[Layer structure]

In the magnetic recording medium of the present invention, the thickness of the nonmagnetic support preferably ranges from 2 to 100 micrometers, more preferably from 2 to 80 micrometers. For computer-use magnetic recording tapes, the nonmagnetic support having a thickness of 3.0 to 6.5 micrometers, preferably 3.0 to 6.0 micrometers, more preferably 4.0 to 5.5 micrometers is suitably employed.

An undercoating layer may be provided to improve adhesion between the nonmagnetic support and the nonmagnetic layer or magnetic layer. The thickness of the undercoating layer can be made from 0.01 to 0.5 micrometer, preferably from 0.02 to 0.5 micrometer. The magnetic recording medium of the present invention may be a disk-shaped medium in which a nonmagnetic layer and magnetic layer are provided on both sides of the nonmagnetic support, or may be a tape-shaped or disk-shaped magnetic recording medium having these layers on just one side. In the latter case, a backcoat layer may be provided on the opposite surface of the nonmagnetic support from the surface on which is provided the magnetic layer to achieve effects such as preventing static and compensating for curl. The thickness of the backcoat layer is, for example, from 0.1 to 4 micrometers, preferably from 0.3 to 2.0 micrometers. Known undercoating layers and backcoat layers may be employed.

In the magnetic recording medium of the present invention, the thickness of the magnetic layer can be optimized based on the saturation magnetization of the head employed, the length of the head gap, and the recording signal band, and is preferably 0.01 to 0.15 micrometer, more preferably 0.04 to 0.1 micrometer. The magnetic layer may be divided into two or more layers having different magnetic characteristics, and a known configuration relating to multilayered magnetic layer may be applied.

The nonmagnetic layer is normally 0.2 to 5.0 micrometers, preferably 0.3 to 3.0 micrometers, and more preferably, 1.0 to 2.5 micrometers in thickness. The nonmagnetic layer exhibits its effect so long as it is substantially nonmagnetic. For example, the effect of the present invention is exhibited even when trace quantities of magnetic material are incorporated as impurities or intentionally incorporated, and such incorporation can be viewed as substantially the same configuration as the present invention.

[Backcoat layer]

Generally, computer data recording-use magnetic tapes are required to have far better repeat running properties than audio and video tapes. Carbon black and inorganic powders are desirably incorporated into the backcoat layer to maintain high running durability.

Two types of carbon black of differing mean particle diameter are desirably combined for use. In this case, microparticulate carbon black with a mean particle diameter of 10 to 20 nm and coarse particulate carbon black with a mean particle diameter of 230 to 300 nm are desirably combined for use. Generally, the addition of such microparticulate carbon black makes it possible to set a lower surface electrical resistance and optical transmittance in the backcoat layer. Many magnetic recording devices exploit the optical transmittance of the tape in an operating signal. In such cases, the addition of microparticulate carbon black is particularly effective. Microparticulate carbon black generally enhances liquid lubricant retentivity, contributing to a reduced coefficient of friction when employed with lubricants. Coarse particulate carbon black having a mean particle diameter of 230 to 300 nm functions as a solid lubricant. It forms micropmtrusions on the surface of the backcoat layer, reducing the contact surface area and contributing to a reduction in the coefficient of friction. However, when only coarse particulate carbon black is employed, tape sliding in severe running systems sometimes causes the coarse particulate carbon black to tend to drop out of the backcoat layer, resulting in an increased error rate. In the present invention, the above points are desirably taken into account in selecting the carbon black employed in the backcoat layer.

Examples of specific microparticulate carbon black products are given below and the mean particle diameter is given in parentheses: RAVEN2000H (18nm), RAVEN1500B (17nm) from Columbia Carbon Co., Ltd.; BP800(17nm) from Cabot Corporation; PRINNTEX90 (14nm), PRINTBX95 (15nm), PRINTEX85 (16nm), PRINTEX75 (17nm) from Degussa; #3950(16nm) from Mitsubishi Chemical Corporation.

Examples of specific coarse particulate carbon black products are given below: Thermal black (270 nm) from Cancarb Limited.; RAVEN MTP (275 nm) from Columbia Carbon Co., Ltd.

When employing two types of carbon black having different mean particle diameters in the backcoat layer, the ratio (by weight) of the content of microparticulate carbon black of 10 to 20 nm to that of coarse particulate carbon black of 230 to 300 nm preferably ranges from 98:2 to 75:25, more preferably from 95:5 to 85:15.

The content of carbon black in the backcoat layer (the total quantity when employing two types of carbon black) normally ranges from 30 to 80 weight parts, preferably 45 to 65 weight parts, per 100 weight parts of binder.

Two types of inorganic powder of differing hardness are desirably employed in combination. Specifically, a soft inorganic powder with a Mohs' hardness of 3 to 4.5 and a hard inorganic powder with a Mohs' hardness of 5 to 9 are desirably employed. The addition of a soft inorganic powder with a Mohs' hardness of 3 to 4.5 permits stabilization of the coefficient of friction during repeat running. Within the stated range, the sliding guide poles are not worn down. The mean particle diameter of the soft inorganic powder desirably ranges from 30 to 50 nm.

Examples of soft organic powders having a Mohs' hardness of 3 to 4.5 are calcium sulfate, calcium carbonate, calcium silicate, barium sulfate, magnesium carbonate, zinc carbonate, and zinc oxide. These may be employed singly or in combinations of two or more.

The content of the soft inorganic powder in the backcoat layer preferably ranges from 10 to 140 weight parts, more preferably 35 to 100 weight parts, per 100 weight parts of carbon black.

The addition of a hard inorganic powder with a Mohs' hardness of 5 to 9 increases the strength of the backcoat layer and improves running durability. When the hard inorganic powder is employed with carbon black and the above-described soft inorganic powder, deterioration due to repeat sliding is reduced and a strong backcoat layer is obtained. The addition of the hard inorganic powder imparts suitable abrasive strength and reduces adhesion of scrapings onto the tape guide poles and the like. Particularly when employed with a soft inorganic powder, sliding characteristics on guide poles with rough surface are enhanced and the coefficient of friction of the backcoat layer can be stabilized. The mean particle diameter of the hard inorganic powder preferably ranges from 80 to 250 nm, more preferably 100 to 210 nm.

Examples of hard inorganic powders having a Mohs' hardness of 5 to 9 are *alpha*-iron oxide, *alpha*-alumina, and chromium oxide ($Cr_2O_3$). These powders may be employed singly or in combination. Of these, *alpha*-iron oxide and *alpha*-alumina are preferred. The content of the hard inorganic powder is normally 3 to 30 weight parts, preferably 3 to 20 weight parts, per 100 weight parts of carbon black.

When employing the above-described soft inorganic powder and hard inorganic powder in combination in the backcoat layer, the soft inorganic powder and the hard inorganic powder are preferably selected so that the difference in hardness between the two is equal to or greater than 2 (more preferably equal to or greater than 2.5, further preferably equal to or greater than 3). The backcoat layer desirably comprises the above two types of inorganic powder having the above-specified mean particle sizes and difference in Mohs' hardness and the above two types of carbon black of the above-specified mean particle sizes.

The backcoat may also contain a lubricant. The lubricant may be suitably selected from among the lubricants given as examples above for use in the nonmagnetic layer and magnetic layer. The lubricant is normally added to the backcoat layer in a proportion of 1 to 5 weight parts per 100 weight parts of binder.

[Nonmagnetic support]

Known films of the following may be employed as the nonmagnetic support in the present invention: polyethylene terephthalate, polyethylene naphthalate, other polyesters, polyolefins, cellulose triacetate, polycarbonate, polyamides, polyimides, polyamidoimides, polysulfones, aromatic polyamides, polybenzooxazoles, and the like. Supports having a glass transition temperature of equal to or higher than 100°C are preferably employed. The use of polyethylene naphthalate, aramid, or some other high-strength support is particularly desirable. As needed, layered supports such as disclosed in Japanese Unexamined Patent Publication (KOKAI) Heisei No. 3-224127 may be employed to vary the surface roughness of the magnetic surface and support surface. These supports may be subjected beforehand to corona discharge treatment, plasma treatment, adhesion enhancing treatment, heat treatment, dust removal, and the like.

The center surface average surface roughness (SRa) of the support measured with an optical interferotype surface roughness meter HD-2000 made by WYKO is preferably equal to or less than 8.0 nm, more preferably equal to or less than 4.0 nm, further preferably equal to or less than 2.0 nm. Not only does such a support desirably have a low center surface average surface roughness, but there are also desirably no large protrusions equal to or higher than 0.5 micrometer. The surface roughness shape may be freely controlled through the size and quantity of filler added to the support as needed. Examples of such fillers are oxides and carbonates of elements such as Ca, Si, and Ti, and organic fine powders such as acrylic-based one. The support desirably has a maximum height $R_{max}$ equal to or less than 1 micrometer, a ten-point average roughness $R_z$ equal to or less than 0.5 micrometer, a center surface peak height $R_P$ equal to or less than 0.5 micrometer, a center surface valley depth $R_V$ equal to or less than 0.5 micrometer, a center-surface surface area percentage Sr of 10 percent to 90 percent, and an average wavelength *lambda*$_a$ of 5 to 300 micrometers. To achieve desired electromagnetic characteristics and durability, the surface protrusion distribution of the support can be freely controlled with fillers. It is possible to control within a range from 0 to 2,000 protrusions of 0.01 to 1 micrometer in size per 0.1 mm$^2$.

The F-5 value of the nonmagnetic support employed in the present invention desirably ranges from 5 to 50 kg/mm$^2$, approximately 49 to 490 MPa. The thermal shrinkage rate of the support after 30 min at 100°C is preferably equal to or less than 3 percent, more preferably equal to or less than 1.5 percent. The thermal shrinkage rate after 30 min at 80°C is preferably equal to or less than 1 percent, more preferably equal to or less than 0,5 percent. The breaking strength of the nonmagnetic support preferably ranges from 5 to 100 kg/mm$^2$, approximately 49 to 980 MPa. The modulus of elasticity preferably ranges from 100 to 2,000 kg/mm$^2$, approximately 0.98 to 19.6 GPa. The thermal expansion coefficient preferably ranges from $10^{-4}$ to $10^{-8}$/°C, more preferably from $10^{-5}$ to $10^{-6}$/°C. The moisture expansion coefficient is preferably equal to or less than $10^{-4}$/RH percent, more preferably equal to or less than $10^{-5}$/RH percent. These thermal characteristics, dimensional characteristics, and mechanical strength characteristics are desirably nearly equal, with a difference equal to less than 10 percent, in all in-plane directions in the support.

[Manufacturing method]

The process for manufacturing coating liquids for magnetic and nonmagnetic layers comprises at least a kneading step, a dispersing step, and a mixing step to be carried out, if necessary, before and/or after the kneading and dispersing steps. Each of the individual steps may be divided into two or more stages. All of the starting materials employed in the present invention, including the ferromagnetic powder, nonmagnetic powder, binders, carbon black, abrasives, antistatic agents, lubricants, solvents, and the like, may be added at the beginning of, or during, any of the steps. Moreover, the individual starting materials may be divided up and added during two or more steps. For example, polyurethane may be divided up and added in the kneading step, the dispersion step, and the mixing step for viscosity adjustment after dispersion. To achieve the object of the present invention, conventionally known manufacturing techniques may be utilized for some of the steps. A kneader having a strong kneading force, such as an open kneader, continuous kneader, pressure kneader, or extruder is preferably employed in the kneading step. When a kneader is employed, the ferromagnetic powder or nonmagnetic powder and all or part of the binder (preferably equal to or higher than 30 weight percent of the entire quantity of binder) are kneaded in a range of 15 to 500 parts per 100 parts of the ferromagnetic powder. Details of the kneading process are described in Japanese Unexamined Patent Publication (KOKAI) Heisei Nos. 1-106338 and 1-79274. Further, glass beads may be employed to disperse the coating liquids for magnetic and nonmagnetic layers, with a dispersing medium with a high specific gravity such as zirconia beads, titania beads, and steel beads being suitable for use. The particle diameter and fill ratio of these dispersing media are optimized for use. A known dispersing device may be employed.

When coating a magnetic recording medium of multilayer configuration in the present invention, as set forth above, the use of a wet-on-dry method in which a coating liquid for forming a nonmagnetic layer is coated on the nonmagnetic support and dried to form a nonmagnetic layer, and then a coating liquid for forming a magnetic layer is coated on the nonmagnetic layer and dried. With this method, the thickness variation of the magnetic layer can be reduced to improve the S/N ratio. Therefore, this method is suitable for manufacturing a high-density magnetic recording medium.

When using a wet-on-wet method in which a coating liquid for forming a nonmagnetic layer is coated, and while this coating is still wet, a coating liquid for forming a magnetic layer is coated thereover and dried, the following methods are desirably employed;

(1) a method in which the nonmagnetic layer is first coated with a coating device commonly employed to coat magnetic coating materials such as a gravure coating, roll coating, blade coating, or extrusion coating device, and the magnetic layer is coated while the nonmagnetic layer is still wet by means of a support pressure extrusion coating device such as is disclosed in Japanese Examined Patent Publication (KOKOKU) Heisei No. 1-46186 and Japanese Unexamined Patent Publication (KOKAI) Showa No. 60-238179 and Japanese Unexamined Patent Publication (KOKAI) Heisei No. 2-265672;

(2) a method in which the upper and lower layers are coated nearly simultaneously by a single coating head having two built-in slits for passing coating liquid, such as is disclosed in Japanese Unexamined Patent Publication (KOKAI) Showa No. 63-88080, Japanese Unexamined Patent Publication (KOKAI) Heisei No. 2-17971, and Japanese Unexamined Patent Publication (KOKAI) Heisei No. 2-265672; and

(3) a method in which the upper and lower layers are coated nearly simultaneously using an extrusion coating apparatus with a backup roller as disclosed in Japanese Unexamined Patent Publication (KOKAI) Heisei No. 2-174965. To avoid deteriorating the electromagnetic characteristics or the like of the magnetic recording medium by aggregation of magnetic particles, shear is desirably imparted to the coating liquid in the coating head by a method such as disclosed in Japanese Unexamined Patent Publication (KOKAI) Showa No. 62-95174 or Japanese Unexamined Patent Publication (KOKAI) Heisei No. 1-236968. In addition, the viscosity of the coating liquid preferably satisfies the numerical range specified in Japanese Unexamined Patent Publication (KOKAI) Heisei No. 3-8471.

The above-described magnetic recording medium that has been coated and dried is normally calendered. The calendering rolls employed may be in the form of heat-resistant plastic rolls, such as epoxy, polyimide, polyamide, and polyimidoamide rolls, or in the form of metal rolls. Processing with metal rolls is particularly desirable for magnetic recording media in which magnetic layers are provided on both sides. The processing temperature is preferably equal to or greater than 50°C, more preferably equal to or greater than 100°C. The linear pressure is preferably equal to or greater than 200 kg/cm, approximately 196 kN/m, more preferably equal to or greater than 300 kg/cm, approximately 294 kN/m.

[Physical characteristics]

In the magnetic recording medium of the present invention, the saturation magnetic flux density in the magnetic layer is preferably 0.05 to 0.5 T when employing a ferromagnetic metal powder and 0.15 to 0.7 T when employing a hexagonal ferrite powder. The coercivity (Hc) of the magnetic layer is preferably 2,000 to 5,000 Oe, approximately 159 to 398 kA/m, more preferably 2,500 to 3,000 Oe, approximately 199 to 239 kA/m. When the coercivity of the magnetic layer falls within this range, self demagnetization loss has little effect and good recording can be conducted. A narrow coercivity distribution is desirable; the SFD is desirably equal to or less than 0.6.

The magnetization switching volume (V) of the magnetic layer in the magnetic recording medium of the present invention preferably ranges from 1,000 to 15,000 $nm^3$, more preferably 1,000 to 5,000 $nm^3$, and further preferably, from 1,000 to 3,000 $nm^3$. When the magnetization switching volume falls within this range, a magnetic unit of adequate size for a linear recording density of equal to or greater than 300 Kbpi can be ensured.

The magnetization switching volume (V) can be calculated by measuring the magnetic field sweep rate in the Hc measurement unit for 5 minutes and 30 minutes with a vibrating sample magnetometer (VSM) and using the following equation of the relation between the Hc and magnetization switching volume V depending on thermal fluctuation:

$$Hc = (2K/Ms) \{1-[(kT/KV)\ln(At/0.693)]^{1/2}\}$$

(where K: anisotropic constant; Ms: saturation magnetization; k: Boltzmann constant; T: absolute temperature; V: magnetization switching volume; At: spin precession frequency).

Magnetization switching volume (V) is thought to correlate with the particle size of the ferromagnetic powder, particularly the size of particles affecting noise. V can be controlled by adjusting the particle size (for example, the particle volume) of the ferromagnetic powder, magnetic characteristics, orientation of the magnetic layer, and the like.

The coefficient of friction of the magnetic recording medium of the present invention relative to the head is preferably equal to or less than 0.5 and more preferably equal to or less than 0.3 at temperatures ranging from -10°C to 40°C and humidity ranging from 0 percent to 95 percent, the surface resistivity on the magnetic surface preferably ranges from $10^4$ to $10^{12}$ ohm /sq, and the charge potential preferably ranges from -500 V to +500 V. The modulus of elasticity at 0.5 percent extension of the magnetic layer preferably ranges from 100 to 2,000 $kg/mm^2$, approximately 0.98 to 19.6 GPa, in each in-plane direction. The breaking strength preferably ranges from 10 to 70 $kg/mm^2$, approximately 98 to 686 MPa. The modulus of elasticity of the magnetic recording medium preferably ranges from 100 to 1,500 $kg/mm^2$, approximately 0.98 to 14.7 GPa, in each in-plane direction. The residual elongation is preferably equal to or less than 0.5 percent, and the thermal shrinkage rate at all temperatures below 100°C is preferably equal to or less than 1 percent, more preferably equal to or less than 0.5 percent, and most preferably equal to or less than 0.1 percent. The glass transition temperature (i.e., the temperature at which the loss elastic modulus of dynamic viscoelasticity peaks as measured at 110 Hz) of the magnetic layer preferably ranges from 50 to 120°C, and that of the nonmagnetic layer preferably ranges from 0 to 100°C. The loss elastic modulus preferably falls within a range of $1 \times 10^9$ to $8 \times 10^{10}$ $\mu N/cm^2$ and the loss tangent is preferably equal to or less than 0.2. Adhesion failure tends to occur when the loss tangent becomes excessively large. These thermal characteristics and mechanical characteristics are desirably nearly identical, varying by 10 percent or less, in each in-plane direction of the medium. The residual solvent contained in the magnetic layer is preferably equal to or less than 100 $mg/m^2$ and more preferably equal to or less than 10 $mg/m^2$. The void ratio in the coated layers, including both the nonmagnetic layer and the magnetic layer, is preferably equal to or less than 30 volume percent, more preferably equal to or less than 20 volume percent. Although a low void ratio is preferable for attaining high output, there are some cases in which it is better to ensure a certain level based on the object. For example, in many cases, larger void ratio permits preferred running durability in disk media in which repeat use is important.

The center surface average surface roughness Ra of the magnetic layer measured in an area of about 250 micrometers $\times$ 250 micrometers with an optical interferotype surface roughness meter HD-2000 made by WYKO is preferably equal to or less than 4.0 nm, more preferably equal to or less than 3.0 nm, and further preferably equal to or less than 2.0 nm. The maximum height $R_{max}$ of the magnetic layer is preferably equal to or less than 0.05 micrometer, the ten-point average surface roughness Rz is preferably equal to or less than 0.02 micrometer. On the surface of the magnetic layer, it is possible to freely control the number of surface protrusions of 0.01 to 1 micrometer in size within a range from 0 to 2,000 per 0.1 $mm^2$ to optimize electromagnetic characteristics and the coefficient of friction. These can be readily achieved by controlling surface properties through the filler used in the support, by controlling the particle diameter and quantity of the powder added to the magnetic layer, and by controlling the roll surface configuration in calendar processing. Curling is preferably controlled to within $\pm$ 3 mm.

In the magnetic recording medium of the present invention, it will be readily deduced that the physical properties of the nonmagnetic layer and magnetic layer may be varied based on the objective. For example, the modulus of elasticity of the magnetic layer may be increased to improve running durability while simultaneously employing a lower modulus of elasticity than that of the magnetic layer in the nonmagnetic layer to improve the head contact of the magnetic recording medium.

In the magnetic recording medium of the present invention, a magnetic signal is recorded in the longitudinal direction at a linear recording density of equal to or greater than 300 Kbpi. This linear recording density is preferably 300 to 500 Kbpi, more preferably 350 to 450 TGbpi. In the present invention, high reproduction output can be achieved using an MR head with a short shield spacing of equal to or less than 0.2 micrometer to reproduce a magnetic signal recorded at high density in the longitudinal direction. The shield spacing of the MR head is preferably 0.05 to 0.2 micrometer, more preferably 0.08 to 0.16 micrometer.

## EXAMPLES

The specific examples of the present invention and comparative examples will be described below. However, the present invention is not limited to the examples. Further, the "parts" given in Examples are weight parts unless specifically stated otherwise.

[Example 1]

| Magnetic layer coating liquid | |
|---|---|
| Magnetic powder BaFe (mean particle diameter: 30 nm) | 100 parts |
| Polyurethane resin containing sulfonic acid group (Mw=80,000, content of $SO_3Na$=200eq/t) | 12 parts |
| Isocyanate curing agent Coronate L (manufactured by Nippon Polyurethane Industry Co. Ltd.) | 5 parts |
| HIT-55 manufactured by Sumitomo Chemical Co.,Ltd. | 5 parts |
| Carbon black #50 (manufactured by Asahi Carbon Co., Ltd.) | 1 part |
| Phenylphosphonic acid | 2 parts |
| Butyl stearats | 1 part |
| Butoxyethyl stearate | 1 part |
| Isohexadecyl stearate | 1 part |
| Stearic acid | 2 parts |
| Methyl ethyl ketone | 125 parts |
| Cyclohexanone | 125 parts |

| Nonmagnetic layer coating liquid | |
|---|---|
| Nonmagnetic powder $TiO_2$ Crystalline rutile | 80 parts |
| Mean primary particle diameter: 0.035 micrometer | |
| Specific surface area by BET method: 40 $m^2$/g | |
| pH: 7 | |
| $TiO_2$ content: 90 weight percent or greater | |
| DBP oil absorption capacity: 27 to 38 g/100g | |

| Surface treatment agent: $Al_2O_3$ (8 weight percent) | |
|---|---|
| CONDUCTEX SC-U (manufactured by Columbia Carbon Co., Ltd.) | 20 parts |
| MR110 (manufactured by Nippon Zeon Co,, Ltd.) | 12 parts |
| Vylon UR8200 (manufactured by Toyobo Co., Ltd.) | 5 parts |
| Butyl stearate | 1 part |
| Butoxyethyl stearate | 1 parts |
| Isohexadecyl stearate | 3 parts |
| Stearic acid | 3 parts |
| Methyl ethyl ketone/ Cyclohexanone (8/2 mixed solvent) | 250 parts |

For each coating liquid described above, the individual components were kneaded in a kneader, dispersed in a sand mill, and filtered with a filter having a mean pore diameter of 1 micrometer to prepare a magnetic layer coating liquid and a nonmagnetic layer coating liquid. The nonmagnetic layer coating liquid was coated in a quantity calculated to yield a dry thickness of 1.0 micrometer to a polyethylene terephthalate support with a center line average surface roughness of 3 nm and a thickness of 6 micrometers and dried. Subsequently, the magnetic layer coating liquid was coated at a coating rate of 100 m/min. Immediately following coating, a magnetic field of 4,000 Oe (approximately 318 kA/m) was applied in a direction perpendicular to the web to orient the coating in a perpendicular direction. After drying, processing was conducted with a seven-stage calender at a temperature of 90°C and a linear pressure of 300 kg/cm (approximately 2,940 N/cm). The thickness of the magnetic layer was 0.085 micrometer.

The various properties of the computer tape obtained were evaluated by the following measurement methods.

Measurement Methods

(1) Electromagnetic characteristics

Measurement was conducted in a 1/2 inch linear system in which a head was fixed. The relative speed between the head and tape was 10 m/see.

Magnetic signals were recorded at the linear recording density shown in Table 1 with an MIG head having the saturation magnetic flux density shown in Table 1 (gap length: see Table 1, track width: 8 micrometers). The recording current was set to the optimal recording level for each tape. An anisotropic MR head (A-MR) with an element thickness of 15 nm and the shield spacing given in Table I was employed as the reproduction head.

(2) S/N ratio

Signals were recorded in the longitudinal direction at the linear recording density given in Table 1 and the reproduced signals were frequancy-analyzed with a Spectrum Analyzer made by Shibasoku Co., Ltd. The ratio of the output of the carrier signal to the integral noise of the full band spectrum was adopted as the S/N ratio.

(3) Squareness (SQ) of the magnetic layer in the perpendicular direction

The magnetic field sweep rate in the Hc measurement unit was measured for 5 minutes with a vibrating sample magnetometer (VSM) in the perpendicular direction of the sample. The value obtained by demagnetization field correction of the measured value was adopted as the squareness in the perpendicular direction.

[Example 2]

The same operation as in Example I was conducted with the exception that the linear recording density was 300 Kbpi.

[Example 3]

The same operation as in Example 1 was conducted with the exception that an MR head with a shield spacing of 0.2 micrometer was employed.

[Example 4]

The same operation as in Example 1 was conducted with the exception that the coating rate of the magnetic layer coating liquid was 150 m/minute.

[Example 5]

The same operation as in Example 1 was conducted with the exception that the coating rate of the magnetic layer coating liquid was 50 m/minute and the magnetic field during orientation was changed to 6,000 Oe (approximately 477 kA/m).

[Example 6]

The same operation as in Example 1 was conducted with the exception that a recording head with a gap length of 0.3 micrometer was employed.

[Example 7]

The same operation as in Example 1 was conducted with the exception that a recording head with a saturation magnetic flux density of 1.3 T was employed.

[Example 8]

The same operation as in Example 1 was conducted with the exception that the magnetic layer thickness was 0.2 micrometer.

[Example 9]

The same operation as in Example 1 was conducted with the exception that the ferromagnetic powder contained in the magnetic layer was changed to barium ferrite (BaFe) with a mean particle diameter of 50 nm.

[Example 10]

The same operation as in Example 1 was conducted with the exception that the magnetic layer coating liquid was coated over the nonmagnetic layer while the nonmagnetic layer was still wet.

[Comparative Example 1]

The same operation as in Example 1 was conducted with the exception that the linear recording density was changed to 200 Kbpi.

[Comparative Example 2]

The same operation as in Example I was conducted with the exception that an MR head with a shield gap of 0.3 micrometer was employed as the reproduction head.

[Comparative Example 3]

The same operation as in Example 1 was conducted with the exception that the coating rate of the magnetic layer coating liquid was 100 m/min, and the magnetic field during orientation was changed to 3,000 Oe (approximately 239 kA/m).

[Comparative Example 4]

The same operation as in Example 1 was conducted with the exception that a recording head with a gap length of 0.4 micrometer was employed.
Table 1

| | Linear recording density (Kbpi) | MR head shield spacing (μm) | SQ in the vertical direction | Recording head gap (μm) | Recording head Bs (T) |
|---|---|---|---|---|---|
| Example 1 | 400 | 0.16 | 0.7 | 0.2 | 1.8 |
| Example 2 | 300 | 0.16 | 0.7 | 0.2 | 1.8 |
| Example 3 | 400 | 0.2 | 0.7 | 0.2 | 1.8 |
| Example 4 | 400 | 0.16 | 0.6 | 0.2 | 1.8 |
| Example 5 | 400 | 0.16 | 0.9 | 0.2 | 1.8 |
| Example 6 | 400 | 0.16 | 0.7 | 0.3 | 1.8 |
| Example 7 | 400 | 0.16 | 0.7 | 0.2 | 1.3 |
| Example 8 | 400 | 0.16 | 0.7 | 0.2 | 1.8 |
| Example 9 | 400 | 0.16 | 0.7 | 0.2 | 1.8 |
| Example 10 | 400 | 0.16 | 0.7 | 0.2 | 1.8 |
| Comp.Ex.1 | 200 | 0.16 | 0.7 | 0.2 | 1.8 |
| Comp.Ex.2 | 400 | 0.3 | 0.7 | 0.2 | 1.8 |
| Comp.Ex.3 | 400 | 0.16 | 0.4 | 0.2 | 1.8 |
| Comp.Ex.4 | 400 | 0.16 | 0.7 | 0.4 | 1.8 |

17

**Table 1 (continued)**

| | Magnetic layer thickness (µm) | Magnetization reversal volume (nm³) | Coating method | [1]5Gbpsi-normalized SNR (dB) |
|---|---|---|---|---|
| Example 1 | 0.085 | 5000 | wet-on-dry | 4 |
| Example 2 | 0.085 | 5000 | wet-on-dry | 4 |
| Example 3 | 0.085 | 5000 | wet-on-dry | 3 |
| Example 4 | 0.085 | 5000 | wet-on-dry | 3 |
| Example 5 | 0.085 | 5000 | wet-on-dry | 3 |
| Example 6 | 0.085 | 5000 | wet-on-dry | 2 |
| Example 7 | 0.085 | 5000 | wet-on-dry | 2 |
| Example 8 | 0.2 | 5000 | wet-on-dry | 1 |
| Example 9 | 0.085 | 20000 | wet-on-dry | 1 |
| Example 10 | 0.085 | 5000 | wet-on-wet | 0 |
| Comp.Ex.1 | 0.085 | 5080 | wet-on-dry | -1 |
| Comp.Ex.2 | 0.085 | 5000 | wet-on-dry | -1 |
| Comp.Ex.3 | 0.085 | 5000 | wet-on-dry | -3 |
| Comp.Ex.4 | 0.085 | 5000 | wet-on-dry | -2 |

1) 5Gbpsi-normalized SNR was converted into 4Gbpsi by adjusting track width, but calculated at SNR-3dB at 50% track width.

Evaluation Results

As shown in Table 1, in Examples 1 to 10 in which a recording head with a gap length of equal to or less than 0.3 micrometer was used to record signals in a longitudinal direction at a linear recording density of 300 Kbpi or greater on a magnetic layer having a squareness of 0.6 to 1.0 in a perpendicular direction and an MR head with a shield spacing of equal to or less than 0.2 micrometer was employed to reproduce the signals, good S/N ratios were achieved. By contrast, poor S/N ratios were achieved in Comparative Example 1, in which the linear recording density was less than 300 Kbpi; Comparative Example 2, in which an MR head with a shield spacing exceeding 0.2 micrometer was employed; Comparative Example 3, in which the squareness in the perpendicular direction of the magnetic layer was less than 0.6; and Comparative Example 4, in which a recording head with a gap length exceeding 0.3 micrometer was employed. From these results, it can be understood that by recording a signal in the longitudinal direction on a magnetic layer that has been actively oriented in the perpendicular direction to achieve optimal squareness for the system, it becomes possible to achieve good reproduction output in the short wavelength region.

The magnetic recording medium of the present invention can be suitably employed in high-density recording and reproduction systems.

**Claims**

1. A magnetic recording medium comprising a nonmagnetic layer comprising a nonmagnetic powder and a binder and a magnetic layer comprising a ferromagnetic powder and a binder in this order on a nonmagnetic support, wherein said magnetic layer has a squareness ranging from 0.6 to 1.0 in a perpendicular direction, and ,
said magnetic recording medium is employed for recording a magnetic signal on the medium in a longitudinal direction at a linear recording density of equal to or greater than 300Kbpi using a recording head with a gap length of equal to or less than 0.3 micrometer, and reproducing said magnetic signal using a magnetoresistive head with a shield spacing of equal to or less than 0.2 micrometer.

2. Use of a magnetic recording medium for recording a magnetic signal with a recording head and reproducing the magnetic signal with a magnetoresistive head, wherein
said magnetic recording medium comprises a nonmagnetic layer comprising a nonmagnetic powder and a binder and a magnetic layer comprising a ferromagnetic powder and a binder in this order on a nonmagnetic support,
said magnetic layer has a squareness ranging from 0.6 to 1.0 in a perpendicular direction,
said recording head has a gap length of equal to or less than 0.3 micrometer,
said magnetoresistive head has a shield spacing of equal to or less than 0.2 micrometer,
said magnetic signal is recorded on the medium in a longitudinal direction at a linear recording density of equal to or greater than 300Kbpi.

3. The use according to claim 2, wherein said recording head has a saturation magnetic flux density of equal to or greater than 1.5 T.

**4.** The use according to claim 2 or 3, wherein said magnetic layer has a thickness ranging from 0.01 to 0.15 micrometer.

**5.** The use according to any of claims 2 to 4, wherein said magnetic layer has a coercivity ranging from 2000 to 5000 Oe.

**6.** The use according to any of claims 2 to 5, wherein said magnetic layer has a magnetization switching volume ranging from 1004 to 15000 $nm^3$.

**7.** The use according to any of claims 2 to 6, wherein said magnetic recording medium is one formed by coating a coating liquid for forming a nonmagnetic layer on said nonmagnetic support and drying the coating liquid for forming a nonmagnetic layer to form a nonmagnetic layer, and then coating a coating liquid for forming a magnetic layer on said nonmagnetic layer and drying the coating liquid for forming a magnetic layer.

**8.** A method of recording a magnetic signal on a magnetic recording medium with a recording head and reproducing the magnetic signal with a magnetoresistive head, wherein
said magnetic recording medium comprises a nonmagnetic layer comprising a nonmagnetic powder and a binder and a magnetic layer comprising a ferromagnetic powder and a binder in this order on a nonmagnetic support,
said magnetic layer has a squareness ranging from 0.6 to 1.0 in a perpendicular direction,
said recording head has a gap length of equal to or less than 0.3 micrometer,
said magnetoresistive head has a shield spacing of equal to or less than 0.2 micrometer,
said magnetic signal is recorded on the medium in a longitudinal direction at a linear recording density of equal to or greater than 300Kbpi.

**9.** The method according to claim 8, wherein said recording head has a saturation magnetic flux density of equal to or greater than 1.5 T.

**10.** The method according to claim 8 or 9, wherein said magnetic layer has a thickness ranging from 0.01 to 0.15 micrometer.

**11.** The method according to any of claims 8 to 10, wherein said magnetic layer has a coercivity ranging from 2000 to 5000 Oe.

**12.** The method according to any of claims 8 to 11, wherein said magnetic layer has a magnetization switching volume ranging from 1000 to 15000 $nm^3$.

**13.** The method according to any of claims 8 to 12, wherein said magnetic recording medium is one formed by coating a coating liquid for forming a nonmagnetic layer on said nonmagnetic support and drying the coating liquid for forming a nonmagnetic layer to form a nonmagnetic layer, and then coating a coating liquid for forming a magnetic layer on said nonmagnetic layer and drying the coating liquid for forming a magnetic layer.

**European Patent Office**

**EUROPEAN SEARCH REPORT**

Application Number

EP 06 00 3595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 475 783 A (FUJI) 10 November 2004 (2004-11-10) * page 12, line 16 - line 18 * * page 12, line 38 - line 40 * * page 13, line 25 - page 14, line 30 * * page 14, line 50 - line 53; claims 1,4 * ----- | 1-13 | INV. G11B5/70 G11B5/127 G11B5/39 |
| Y | US 2002/064691 A1 (KANBE ET AL.) 30 May 2002 (2002-05-30) * paragraphs [0008], [0022], [0035], [0058], [0082] * ----- | 1-13 | |
| Y | EP 1 469 458 A (FUJI) 20 October 2004 (2004-10-20) * page 13, line 50 - line 56 * * page 14, line 47 - line 55 * * page 15, line 39 - line 43; claim 2 * ----- | 3,9 | |
| A | US 5 419 938 A (KAGOTANI ET AL.) 30 May 1995 (1995-05-30) * column 1, line 66 - column 2, line 2 * * column 2, line 31 - line 39 * ----- | 1-13 | TECHNICAL FIELDS SEARCHED (IPC) G11B |
| A | EP 0 169 929 A (KONISHIROKU) 5 February 1986 (1986-02-05) * page 1, line 9 - page 2, line 2 * * page 23, line 17 - line 25; figure 1E * ----- | 1-13 | |

The present search report has been drawn up for all claims

| Place of search | Date of completion of the search | Examiner |
|---|---|---|
| The Hague | 4 May 2006 | Magrizos, S |

EPO FORM 1503 03.82 (P04C01)

## ANNEX TO THE EUROPEAN SEARCH REPORT
## ON EUROPEAN PATENT APPLICATION NO.

EP 06 00 3595

This annex lists the patent family members relating to the patent documents cited in  the above-mentioned European search report.
The members are as contained in the European Patent Office EDP file on
The European Patent Office is in no way liable for these particulars which are merely  given for the purpose of information.

04-05-2006

| Patent document cited in search report | | Publication date | Patent family member(s) | | Publication date |
|---|---|---|---|---|---|
| EP 1475783 | A | 10-11-2004 | JP<br>US | 2004334946 A<br>2004219353 A1 | 25-11-2004<br>04-11-2004 |
| US 2002064691 | A1 | 30-05-2002 | NONE | | |
| EP 1469458 | A | 20-10-2004 | JP<br>US | 2004319001 A<br>2004219393 A1 | 11-11-2004<br>04-11-2004 |
| US 5419938 | A | 30-05-1995 | JP | 6020254 A | 28-01-1994 |
| EP 0169929 | A | 05-02-1986 | NONE | | |

EPO FORM P0459

For more details about this annex : see Official Journal of the European Patent Office, No. 12/82